# EUROPEAN PATENT SPECIFICATION

(11) **EP 2 417 880 B1**
(45) Date of publication and mention of the grant of the patent: **20.09.2017**
(21) Application number: 10761845.6
(22) Date of filing: 06.04.2010
(51) Int. Cl.: A47J 27/04, A21B 3/04, A47J 27/62, F24C 15/32

(54) **COOKING APPLIANCE CONTROL METHOD**
STEUERVERFAHREN FÜR EINE KOCHVORRICHTUNG
PROCÉDÉ DE COMMANDE D'UN APPAREIL DE CUISSON

(30) Priority: 06.04.2009 KR 20090029657
(43) Date of publication of application: 15.02.2012
(73) Proprietor: LG Electronics Inc., Seoul 150-721 (KR)
(72) Inventor: CHOI, Sung-Ho, Gyoungsangnam-do 641-711 (KR); KIM, Su-Hwan, Gyoungsangnam-do 641-711 (KR); LEE, Sang-Ki, Gyoungsangnam-do 641-711 (KR); OH, Kwang-Suk, Gyoungsangnam-do 641-711 (KR); KIM, Jeong-Kil, Gyoungsangnam-do 641-711 (KR); SHIN, Jang-Mo, Gyoungsangnam-do 641-711 (KR)
(74) Representative: Vossius & Partner Patentanwälte Rechtsanwälte mbB
(86) International application number: PCT/KR2010/002090
(87) International publication number: WO 2010/117184

(56) References cited:
- EP-A2- 1 654 931
- EP-A2- 1 962 021
- JP-A- 2005 282 893
- KR-A- 20050 056 054
- KR-A- 20050 068 482
- KR-B1- 100 643 694
- KR-B1- 100 691 224
- KR-B1- 100 710 218

## Description

### [Technical Field]

The present disclosure relates to a cooker, and more particularly, to a method for controlling a cooker for deodorization.

### [Background Art]

A cooker refers to an electronic appliance for heating food using electricity or gas. The cooker is provided with a cooking chamber where food is cooked, and various kinds of heating sources providing energy for cooking food in the cooking chamber are used.

### [Disclosure]

### [Technical Problem]

However, steam supplied into the cooking chamber may be discharged into the cooker.

EP 1654 931 A2 discloses a steam oven comprising a steam generator. The steam generator includes a steam generation unit for generating steam. The steam oven further comprises a convection fan for circulating air in the cooking chamber and a convection heater for heating the air in the cooking chamber. Furthermore, an operating method of such an oven is also disclosed.

### [Technical Solution]

Embodiments provide a method of controlling a method of controlling a cooker configured to perform the deodorization of a cooking chamber more effectively.

In one embodiment, a method for controlling a cooker includes: oscillating microwave supplied to a cooking chamber, by a high-frequency heating source; and generating steam supplied to the cooking chamber, by a steam generator, wherein in a case a signal for initiating the operation of the steam generator is input before the operation of the high-frequency heating source is started, the operation of the steam generator is initiated at a preset time separately of a time when the operation of the high-frequency heating source is started, and in a case a signal for initiating the operation of the steam generator is input after the operation of the high-frequency heating source is started, the operation of the steam generator is initiated at a time when the signal is input.

The details of one or more embodiments are set forth in the accompanying drawings and the description below. Other features will be apparent from the description and drawings, and from the claims.

### [Advantageous Effects]

According to the embodiment, there is a benefit capable of performing the deodorization of a cooking chamber in a more effective way.

### [Description of Drawings]

Fig. 1 is a schematic view of a cooker controlled by a method for controlling a cooker according to an embodiment.
Fig. 2 is a control flowchart illustrating a method for controlling a cooker according to an embodiment.
Fig. 3 is a graph illustrating operating times of components according to the embodiment.

### [Best Mode]

Hereinafter, a cooker controlling method according to embodiments will be explained in detail with reference to the accompanying drawings.

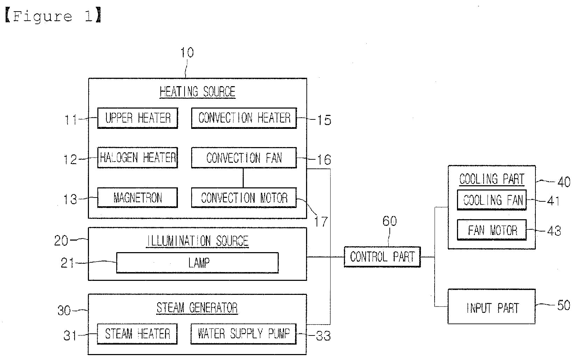

Fig. 1 is a schematic view of a cooker controlled by a method for controlling a cooker according to an embodiment.

Referring to Fig. 1, in the present embodiment, a heating source 10 for cooking food in a cooking chamber includes an upper heater 11, a halogen heater 12 and a magnetron 13. The upper heater 11 is installed in the upper part of a cooking chamber to provide radiating heat for the cooking chamber. As the upper heater 11, a Sheath heater may be used. And, the halogen heater 12 provides radiating heat including light and heat to the cooking chamber. The halogen heater 12 provides radiating heat to the cooking chamber through a porous part (not shown) installed in the upper part of the cooking chamber and formed at the ceiling of the cooking chamber. The magnetron 13 oscillates microwave illuminated inward the cooking chamber.

Also, the heating source 10 further includes a convection heater 15, a convection fan 16 and a convection motor 17. The convection heater 15, the convection fan 16 and the convection motor 17 supply convective heat to the cooking chamber. More particularly, since air heated by the convection heater 15 circulates around the cooking chamber by the operation of the convection fan 16, convective heat is supplied to the cooking chamber. The convection motor 17 provides a drive force for the operation of the convection fan 16.

On the one hand, an illumination source 20 illuminates inside the cooking chamber. As the illumination source 20, a lamp 21 may be used.

And, a steam generator 30 may be provided to supply steam into the cooking chamber. The steam generator 30 includes a steam heater 31 and a water supply pump 33. The steam heater 31 heats steam water for generating steam supplied to the cooking chamber. The water supply pump 33 supplies steam water heated by the steam heater 31.

For the cooling of the heating source 10 and the ventilation of the inside of the cooking chamber, a cooling part 40 may be provided. The cooling part 40 includes a cooling fan 41 and a fan motor 43. That is, by means of air flowing by the cooling fan 41 and the fan motor 43, the encapsulation parts of the halogen heater 12, a magnetron 13, a steam heater 31 and a water supply pump 33 may be cooled. Also, in a case the fan motor 43 is driven, the cooling fan 41 operates so that the exterior air may be supplied inside the cooking chamber, and air let inside the cooking chamber may be drained to the exterior of the cooking chamber in a state of containing oil and moisture, etc., existing in the cooking chamber. A manipulation signal for the operation of the heating source 10 and the steam generator 30 is input to an input part 50. Particularly, in this embodiment, the input part 50 receives a manipulation signal for the deodorization of the cooking chamber. For example, the input part 50 may be configured of more than two buttons respectively receiving a manipulation signal for food cooking in the cooking chamber or a manipulation signal for the deodorization in the cooking chamber.

In the meantime, the control part 60 controls to perform operations for cooking food in the cooking chamber. In particular, the control part 60 controls the operation of the upper heater 11, the halogen heater 12, the convection heater 15, the convection motor 17, the lamp 21, the steam heater 31, the water supply pump 33 and the fan motor 43 according to an manipulation signal inputted into the input part 50 for the deodorization of the cooking chamber.

Hereinafter, a cooker controlling method according to an embodiment will be described in detail with reference to the accompanying drawings.

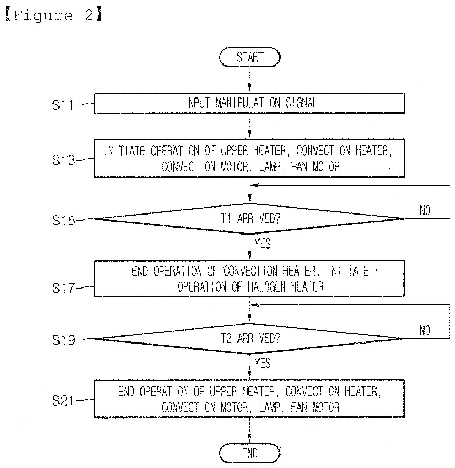

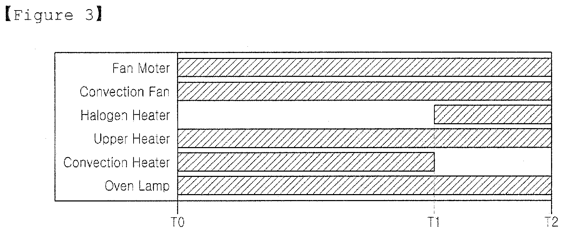

Fig. 2 is a control flowchart illustrating a method for controlling a cooker according to a an embodiment. Fig. 3 is a graph illustrating operating times of components according to the an embodiment.

*23Referring to Figs. 2 and 3, the input part 50 initially receives a manipulation signal for the deodorization of the cooking chamber after food cooking inside the cooking chamber is completed (S11).

In operation S11, in a case the input part 50 receives the manipulation signal, the control part 60 controls to initiate the operation of an upper heater 11, a convection heater 15, an convection motor 17, the lamp 21 and a fan motor 43 (S13). At this time, the upper heater 11 repeats an ON/OFF action at a preset time interval. And, the convection heater 15 repeats an ON/OFF action to maintain a temperature inside the cooking chamber around a preset temperature. Also, the lamp 21 and the fan motor 43 continue ON action.

And, after the operation of the upper heater 11, the convection heater 15, the convection motor 17, the lamp 21 and the fan motor 43 was initiated, the control part 60 determines if they have arrived at a preset first time (T1) according to the manipulation signal (S15). In operation S15, determined that the first time (T1) has arrived, the control part 60 controls to end the operation of the convection heater 15, and to initiate the operation of the halogen heater 12 (S17).

Next, after the operation of the convection heater 15 is ended, and the operation of the halogen heater 12 is initiated, the control part 60 determines if a preset second time (T2) according to the manipulation signal has arrived (S19). In operation S19, determined that a preset second time (T2) has arrived, the control part 60 controls to finish the operation of the upper heater 11, the halogen heater 12, the convection motor 17, the lamp 21 and the fan motor 43 (S21).

Therefore, in the present embodiment, the upper heater 11 and the halogen heater 12 are operated for radiant heating inside the cooking chamber and the convection heater 15 and the convection motor 17 are operated for convective heating inside the cooking chamber, for the purpose of the deodorization of the cooking chamber. Also, in a state the inside of the cooking chamber is heated as described above, the fan motor 43 is operated to ventilate the cooking chamber, so that the deodorization of the cooking chamber is performed.

In the control of the present embodiment, a specific operation of the upper heater 11, the halogen heater 12, the convection motor 17, the steam heater 25, the water supply pump 27, the lamp 21 and the fan motor 43 will be understood more definitely with reference to Fig. 4.

As described above, in a cooker controlling method according to the embodiment, the deodorization of a cooking chamber is effectively performed by the operation of a radiant heating source, a convective heating source and a convection apparatus. Thus, the embodiment may expect an effect to use a cooker more cleanly.

While it has not been described in detail in the above-mentioned embodiments, in the course of cooking food in the cooking chamber, the operation of the upper heater, the halogen heater, the magnetron, the convection heater, the convection motor, the steam heater and the water supply pump would be ended when the cooking chamber is opened, that is, when a door entering into the cooking chamber is open. Considering it is the fact applying to a general cooker, for example an electronic range, the related detailed description will be omitted.

## Claims

1. A method for controlling a cooker, comprising:
supplying steam for the cooking chamber, by a steam generator; and
operating during a respective preset operation time by a convection motor and a convection heater so as to circulate air inside the cooking chamber or furnish convective heat into the cooking chamber, in a case a steam supply into the cooking chamber by the steam generator is completed,
**characterized in that** the operation time of the convection motor and the operation time of the convection heater are partially overlapped,
wherein the convection heater operation is initiated after the convection motor operation is started.

2. The method according to claim 1,
wherein the convection motor continues an ON action during its operation time, and
wherein the convection heater repeats an ON/OFF action during its operation time so as to maintain the temperature of the cooking chamber at a preset temperature.

3. The method according to claim 1, further comprising the operation of operating a radiant heating source radiantly heating the inside of the cooking chamber during a preset operation time.

4. The method according to claim 3, wherein the start point and end point of the radiant heating source operation is set the same as the end point of the convection heater operation and the end point of the convection motor operation, or the same as the start point and end point of the convection motor operation.

5. The method according to claim 1, further comprising the operation of radiantly heating the inside of the cooking chamber by a first radiant heating source and a second radiant heating source,
wherein the operation of the first radiant heating source is initiated in a case the operation of the convection heater is ended, and completed in a case the operation of the convection motor is ended, and
wherein the operation of the second radiant heating source is initiated in a case the operation of the convection fan is started, and completed in a case the operation of the convection motor is ended

6. The method according to claim 5, wherein the first radiant heating source and the second radiant heating source repeat an ON/OFF action at a preset time interval.

## Patentansprüche

1. Verfahren zum Steuern eines Kochgeräts, das aufweist:
Zuführten von Dampf für den Garraum durch einen Dampferzeuger; und
Betreiben eines Konvektionsmotors und eines Konvektionsheizers während einer jeweiligen voreingestellten Betriebszeit, um Luft innerhalb des Garraums umzuwälzen oder Konvektionswärme in den Garraum zu liefern, in einem Fall, dass eine Dampfzufuhr in den Garraum durch den Dampferzeuger beendet ist,
**dadurch gekennzeichnet, dass** sich die Betriebszeit des Konvektionsmotors und die Betriebszeit des Konvektionsheizers teilweise überlappen,
wobei der Konvektionsheizerbetrieb begonnen wird, nachdem der Konvektionsmotorbetrieb gestartet wird.

2. Verfahren nach Anspruch 1,
wobei der Konvektionsmotor einen Ein-Betrieb während seiner Betriebszeit fortsetzt, und
wobei der Konvektionsheizer einen Ein/Aus-Betrieb während seiner Betriebszeit wiederholt, um die Temperatur des Garraums auf einer voreingestellten Temperatur zu halten.

3. Verfahren nach Anspruch 1, das ferner den Vorgang des Betreibens einer Strahlungsheizquelle aufweist, die das Innere des Garraums während einer voreingestellten Betriebszeit strahlend heizt.

4. Verfahren nach Anspruch 3, wobei der Startpunkt und Endpunkt des Strahlungsheizquellenbetriebs genauso wie der Endpunkt des Konvektionsheizerbetriebs und der Endpunkt des Konvektionsmotorbetriebs oder genauso wie der Startpunkt und Endpunkt des Konvektionsmotorbetriebs eingestellt wird.

5. Verfahren nach Anspruch 1, das ferner den Vorgang des strahlenden Heizens des Inneren des Garraums durch eine erste Strahlungsheizquelle und eine zweite Strahlungsheizquelle aufweist,
wobei der Betrieb der ersten Strahlungsheizquelle in einem Fall begonnen wird, in dem der Betrieb des Konvektionsheizers beendet ist, und in einem Fall beendet wird, in dem der Betrieb des Konvektionsmotors beendet ist, und
wobei der Betrieb der zweiten Strahlungsheizquelle in einem Fall begonnen wird, in dem der Betrieb des Konvektionsgebläses begonnen wird, und in einem Fall beendet wird, in dem der Betrieb des Konvektionsmotors beendet ist.

6. Verfahren nach Anspruch 5,
wobei die erste Strahlungsheizquelle und die zweite Strahlungsheizquelle einen Ein/Aus-Betrieb in einem voreingestellten Zeitintervall wiederholen.

## Revendications

1. Procédé de commande d'un appareil de cuisson, comprenant :
le refoulement de vapeur vers le compartiment de caisson par un générateur de vapeur ; et
l'actionnement pendant un temps de fonctionnement défini respectif d'un moteur de convection et d'un chauffage à convection afin de faire circuler de l'air à l'intérieur du compartiment de cuisson ou de refouler de la chaleur de convection dans le compartiment de cuisson, lorsque le refoulement de vapeur vers le compartiment de cuisson par le générateur de vapeur est terminé,
**caractérisé par** un chevauchement partiel du temps de fonctionnement du moteur de convection et du temps de fonctionnement du chauffage à convection,
le fonctionnement du chauffage à convection étant déclenché après l'actionnement du moteur de convection.

2. Procédé selon la revendication 1,
où le moteur de convection resté activé sur ON pendant son temps de fonctionnement, et où le chauffage à convection répète une commutation ON/OFF pendant son temps de fonctionnement afin de maintenir la température du compartiment de cuisson à une température définie.

3. Procédé selon la revendication 1, comprenant en outre l'activation du fonctionnement d'une source de chauffage par rayonnement irradiant de la chaleur à l'intérieur du compartiment de cuisson pendant un temps de fonctionnement défini.

4. Procédé selon la revendication 3,
où le commencement et la fin du fonctionnement de la source de chauffage par rayonnement sont définis identiques à la fin de fonctionnement du chauffage à convection et à la fin de fonctionnement du moteur de convection, ou identiques au commencement et à la fin de fonctionnement du moteur de convection.

5. Procédé selon la revendication 1, comprenant en outre l'activation d'un chauffage par rayonnement de l'intérieur du compartiment de cuisson par une première source de chauffage par rayonnement et une deuxième source de chauffage par rayonnement,
le fonctionnement de la première source de chauffage par rayonnement étant activé lorsque le fonctionnement du chauffage à convection est terminé, et arrêté lorsque le fonctionnement du moteur de convection est terminé, et
le fonctionnement de la deuxième source de chauffage par rayonnement étant activé lorsque le fonctionnement du ventilateur de convection est activé, et arrêté lorsque le fonctionnement du moteur de convection est terminé.

6. Procédé selon la revendication 5,
où la première source de chauffage par rayonnement et la deuxième source de chauffage par rayonnement répètent une commutation ON/OFF à intervalle temporel défini.
